# EUROPEAN PATENT APPLICATION

(11) **EP 4 088 881 A1**
(43) Date of publication of application: **16.11.2022**
(21) Application number: 20911902.3
(22) Date of filing: 31.07.2020
(51) Int. Cl.: B25J 9/08, B25J 17/00

(54) **BUCKLE FASTENING ASSEMBLY AND MODULAR ROBOT**

(30) Priority: 07.01.2020 CN 202010017092; 07.01.2020 CN 202020031986 U
(71) Applicant: Beijing Keyi Technology Co., Ltd., Beijing 100000 (CN)
(72) Inventor: YANG, Jianbo, Beijing 100000 (CN)
(74) Representative: Zaboliene, Reda
(86) International application number: PCT/CN2020/106310
(87) International publication number: WO 2021/139144

(57) **Abstract**

Disclosed are a buckle fastening assembly and a modular robot. The buckle fastening assembly comprises a buckle assembly (100) and a face buckle (42) cooperating with the buckle assembly (100), wherein the face buckle (42) comprises a buckle connecting surface, a first connecting block (4221) extends from the buckle connecting surface, a gap is provided between the first connecting block (4221) and the buckle connecting surface, the buckle assembly (100) comprises at least one buckle part (101, 102), the buckle part (101, 102) comprises a second connecting block (110) and a locking member arranged around the second connecting block (110), and when the face buckle (42) is rotationally connected to the buckle assembly (100), the first connecting block (4221) is in contact with the second connecting block (110), and the locking member is placed in the gap. The modular robot comprises a plurality of functional assemblies and at least one buckle fastening assembly, and the buckle fastening assembly and the modular robot have advantages such as being stable in connection.

## Description

### TECHNICAL FIELD

The invention relates to the technical field of electronic products, in particular to a buckle fastening assembly and a modular robot.

### BACKGROUND

The connection between the mechanical structures can be indirectly connected through the buckle to form the entire mechanical movement mechanism. The two mechanical structures transmit the rotational torque through the buckle. The existing buckle structure is simple. When installing, only the buckle is directly connected to the two mechanical structures. It is connected by a mechanical structure. The buckle structure of this design is simple, short in service life, insufficient in rigidity, and cannot be applied to high-speed and high-frequency rotating mechanisms. At present, there is a need for a buckle that can realize a stable connection between mechanical structures.

### SUMMARY

In order to overcome the defect of unstable buckle connection between existing mechanical structures, the present invention provides a buckle fastening assembly and a modular robot. The buckle fastening component includes a buckle component and a surface buckle that cooperates with the buckle component; the surface buckle includes a buckle connection surface, and a first connection block extends on the buckle connection surface. A gap is formed between the first connection block and the buckle connection surface, the buckle assembly includes at least one buckle portion, the buckle portion includes a second connection block and a locking member is arranged around the second connection block When the surface buckle is rotatably connected with the buckle assembly, the first connecting block is in contact with the second connecting block, and the locking member is placed in the gap.

Compared with the prior art, the buckle fastening assembly and the modular robot provided by the present invention have the following beneficial effects:

The buckle fastening component includes a buckle component and a surface buckle matched with the buckle component; the surface buckle includes a buckle connection surface, and a first connection block extends on the buckle connection surface. A gap is formed between a connecting block and the buckle connection surface, the buckle assembly includes at least one buckle portion, the buckle portion includes a second connection block and a locking member is arranged around the second connection block, When the surface buckle is rotatably connected with the buckle assembly, the first connecting block is in contact with the second connecting block, and the locking member is placed in the gap. By inserting the locking member into the gap of the surface buckle, the stability of the connection between the buckle component and the surface buckle is realized. The buckle component and the surface buckle need to be rotated at a certain angle to each other before installation or disassembly can be realized.

### BRIEF DESCRIPTION OF THE DRAWINGS

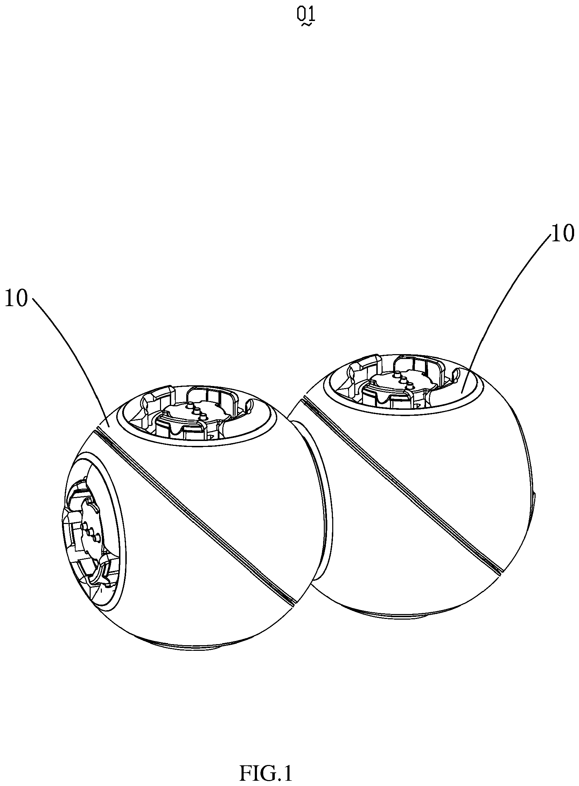

Fig. 1 is a schematic diagram of a three-dimensional structure of a modular robot in a first embodiment of the present invention;
Figure 2-A is a front view of the module unit in the first embodiment of the present invention;
Figure 2-B is a schematic diagram of the connection of two module units in the first embodiment of the present invention;
Figure 2-C is another schematic diagram of the connection of two module units in the first embodiment of the present invention;
3 is a schematic diagram of the exploded structure of the module unit in the first embodiment of the present invention;
4 is a schematic diagram of the exploded structure of the first rotating member in the first embodiment of the present invention;
Figure 5 is a three-dimensional schematic diagram of the connecting piece in the first embodiment of the present invention;
FIG. 6 is a schematic diagram of the exploded structure of the surface buckle in the first embodiment of the present invention;
Fig. 7-A is a schematic diagram of the three-dimensional structure of the buckle connector in the first embodiment of the present invention;
Fig. 7-B is another three-dimensional structural diagram of the buckle connector in the first embodiment of the present invention;
Figure 8 is a front view of the buckle connector in the first embodiment of the present invention;
Figure 9-A is a rear view of the connection of two buckle connectors in the first embodiment of the present invention;
Figure 9-B is a cross-sectional view of Figure 9-A along the A-A directi on;
Figure 10-A is a rear view of the connection of two buckle connectors in the first embodiment of the present invention;
Figure 10-B is a cross-sectional view of Figure 9-A along the C-C direction;
11 is a schematic diagram of the exploded structure of the transmission assembly in the first embodiment of the present invention;
Figure 12 is a schematic diagram of the exploded structure of the rotating assembly in the first embodiment of the present invention;
13 is a schematic diagram of the three-dimensional structure of the magnetic element in the first embodiment of the present invention;
14 is a schematic diagram of the exploded structure of the connecting assembly in the first embodiment of the present invention;
Figure 15 is a top view of the connecting assembly in the first embodiment of the present invention;
Figure 16 is a cross-sectional view of Figure 15 along the B-B direction;
17 is a schematic diagram of the three-dimensional structure of the modular robot in the second embodiment of the present invention;
18 is a schematic diagram of the exploded structure of the buckle assembly in the second embodiment of the present invention;
19 is a schematic diagram of the three-dimensional structure of the rotating connection part in the second embodiment of the present invention;
20 is a schematic diagram of the three-dimensional structure of the first buckle portion in the second embodiment of the present invention;
21 is another three-dimensional structural diagram of the first buckle part in the second embodiment of the present invention;
22 is a schematic diagram of the three-dimensional structure of the connection between the module unit and the buckle assembly in the second embodiment of the present invention;
23 is a schematic diagram of the exploded structure of the module unit position servo system in the third embodiment of the present invention;
24 is a schematic flowchart of a control method of the module unit position servo system in the fourth embodiment of the present invention.

### Description of reference signs:

01. Modular robot; 10. Modular unit; 20. First rotating part; 22. Transmission assembly; 23. Protective cover; 24. Transmission part; 241. Drive motor; 242. Bevel gear; 243. Magnetic part; 244. Speed sensor; 245, mounting plate; 25, rotating component; 251, connecting plate; 252, gear ring; 253, mounting frame; 254, rotating frame; 255, ball; 30, second rotating part; 32, connecting component; 321 , The second PCB board; 322, the conductive ring seat; 323, the slip ring; 324, the magnetic ring; 325, the position sensor; 40, the first rotating part; 41, the housing; 411, the first through hole; 42, the surface 421, the first PCB board; 4211, the LED light source; 4212, the first electrical connector; 4213, the middle through hole; 422, the buckle connector; 4221, the first connection block; 4222, the first receiving hole; 4223. The first protrusion; 423. The shielding piece; 424. The first buckling block; 4241. The connecting protrusion; 4242. The first clamping block; 425. The second buckling block; 4251. Groove; 4252. Two clamping blocks; 426, buckle connection surface; 427, buckle mounting surface; 428, fasteners; 429, side hole; 430, buckle connection hole; 43, connector; 431, second perforation hole; 432. Receptacle; 4321, accommodating groove; 433, resisting piece; 50, second rotating piece, 100, buckle assembly, 101, first buckle part, 102, second buckle part, 103, rotating connection part 104, connecting housing; 105, fixed core; 106, rotating hole; 107, second receiving hole; 108, card slot; 109, limiting protrusion; 110, second connecting block; 111, second electrical connector 112. Locking member; 113. Receiving hole; 114. Rotation limit hole; 1141. Retaining end; 1142. Clamping end; 115. Clamping plate; 116. Third clamping block; 117. Fastening member 118, clamping position; 119, recessed hole; 120, accommodating space; 130, clamping member; 141, first connecting shaft; 142, second connecting shaft; 200, module unit position servo system; 201, rotating part; 202. Position sensor; 203. Magnetic ring; 204. Controller; 210. Motion pair; 211. Transmission assembly; 212. Connection assembly.

### DETAILED DESCRIPTION

In order to make the objectives, technical solutions, and advantages of the present disclosure clearer, the present disclosure is further described in detail below with reference to the accompanying drawings and embodiments. It should be understood that the specific embodiments described herein are provided for illustration only, and not for the purpose of limiting the disclosure.

It should be noted that, when an element is referred to as being "fixed to" another element, it can be directly on the other element or intervening elements may also exist. When an element is referred to as being "connected" to another element, it can be directly connected to the other element or intervening elements may also exist. The terms "vertical", "horizontal", "left", "right" and similar expressions are used herein for illustrative purposes only.

1 and 2-A, the present invention provides a modular robot 01, the modular robot 01 includes at least one modular unit 10, any two of the modular units 10 can be directly or indirectly connected In order to form a motion mechanism, different connection modes between the modular unit 10 and the modular unit 10 can be reconstructed into a modular robot 01 of different configurations. The module unit 10 includes a first rotating part 20 and a second rotating part 30 rotatably connected with the first rotating part 20. The first rotating part 20 and the second rotating part 30 are relatively rotatable to realize modularization. In different motion states of the robot 01, the module unit 10 is a sphere, the first rotating part 20 and the second rotating part 30 are hemispherical, and a servo device (not shown) that can drive at least one of the rotating parts to rotate, so The rotating part may be any one of the first rotating part 20 or the second rotating part 30, and the servo device includes a controller and at least two sensors for sensing the first rotating part 20 and the second rotating part. The relative position, speed, and torque of the part 30 are controlled by the controller to control the position, speed, and torque.

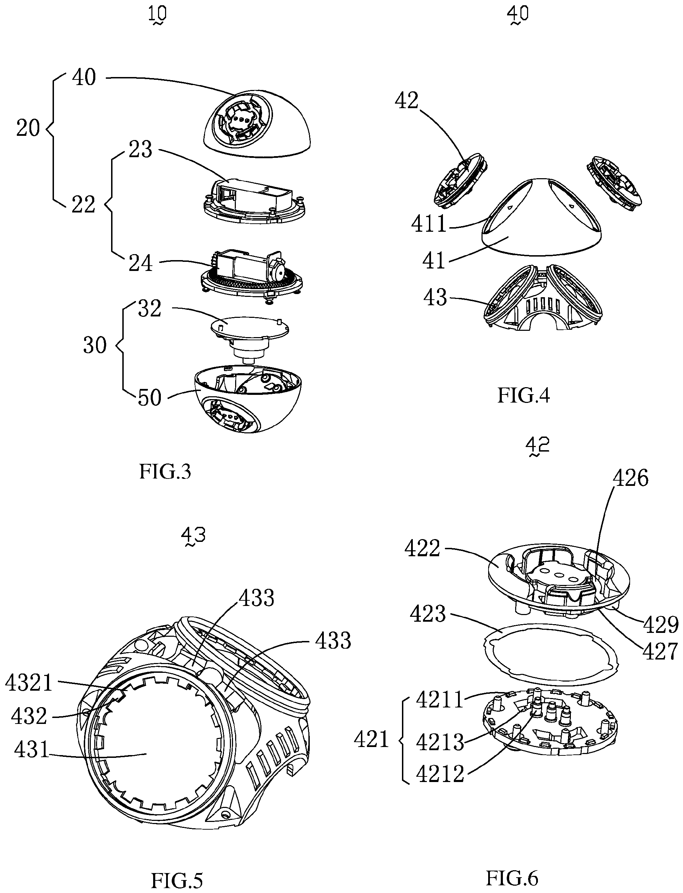

Please refer to FIG. 3, the first rotating part 20 includes a first rotating part 40, and a transmission assembly 22 accommodated in the first rotating part 40. The first rotating part 40 has a hemispherical structure. The second rotating part 30 includes a second rotating part 50, and is accommodated in the connecting assembly 32 of the second rotating part 50. The first rotating member 40 and the second rotating member 50 have the same structure. The transmission assembly 22 is connected to the connecting assembly 32, and the first rotating part 40 and the second rotating part 50 are connected to form an accommodation space for accommodating the transmission assembly 22 and the connecting assembly 32.

Referring to FIGS. 4 and 5, the first rotating member 40 includes a hollow housing 41, a connecting member 43 accommodated in the housing 41, and a buckle 42 connected to at least one side of the connecting member 43. The housing 41 has a hemispherical structure, and the housing 41 is provided with first through holes 411 for the surface buckle 42 to pass through. The number of the first through holes 411 is equal to the number of the surface buckles. The number of the buckles 42 corresponds to that of the surface buckle 42 through the first through hole 411 and connected to the connecting member 43, and the connecting member 43 is accommodated in the housing 41.

The connecting piece 43 corresponds to the shape and structure of the housing 41, and the connecting piece 43 is provided with a second through hole 431 at a position corresponding to the first through hole 411, and the surface buckle 42 in turn The first through hole 411 and the second through hole 431 are penetrated. The inner wall of the second through hole 431 extends to form an annular receiving member 432, the receiving member 432 is provided with a plurality of receiving grooves 4321, and the plurality of receiving grooves 4321 are distributed in a ring shape and connected with the surface buckle 42 .

A resisting member 433 is provided between the two second through holes 431, and the resisting member 433 is formed to protrude toward the connecting component 32. When the connecting component 32 is accommodated in the connecting member 43, The resisting member 433 is resistingly connected to the connecting component 32.

6, the surface buckle 42 includes a buckle connection surface 426, a buckle mounting surface 427 disposed opposite to the buckle connection surface 426, and the surface buckle 42 includes a first surface connected to the receiving groove 4321 The PCB board 421, the snap connector 422 connected to the first PCB board 421, the shielding piece 423 sleeved between the snap connector 422 and the first PCB board 421, the snap connector 422 is connected to another -The buckle connector 422 is connected. One end of the first PCB board 421 is detachably connected to the buckle connector 422, and the other end is electrically connected to the connection assembly 32, and the first PCB board 421 faces one side of the buckle connector 422 A plurality of LED light sources 4211 are arranged in the upper ring shape. When the surface buckle 42 is connected to the connecting member 43, the plurality of LED light sources 4211 are correspondingly accommodated in the receiving groove 4321. A plurality of LED light sources 4211 provide a light source display for the module unit 10 to intuitively display the working status of the module unit 10 to the user in real time. The shielding piece 423 is a hollow structure for the buckle connector 422 and the first PCB board 421 to pass through, and the shielding piece 423 is placed on the LED light source 4211 to contact to prevent the LED light source 4211 from leaking light.

The edge of the buckle mounting surface 427 is provided with at least two side holes 429, and a fastener is inserted between the first PCB board 421 and the buckle mounting surface 427 through the side holes 429 to achieve fixation. At least two first electrical connectors 4212 are provided at the center of the first PCB board 421. One end of the first electrical connector 4212 passes through the first PCB board 421, the shielding piece 423, and is connected to the first electrical connector 4212 in sequence. The buckle connector 422 is connected, the other end of the first electrical connector 4212 is electrically connected to the connection assembly 32, and the first electrical connector 4212 is used to provide signals between a plurality of spliced module units 10 The first electrical connector 4212 can be contacted with the corresponding electrical connector of the external module through the first electrical connector 4212, and signal communication can be realized. The first electrical connector 4212 is a copper pillar and performs a conductive transmission function. In this embodiment, the first electrical connector 4212 is an electrical connector. The first PCB board 421 is also provided with two middle through holes 4213. The middle through holes 4213 correspond to the buckle connector 422, and the middle through holes 4213 can be penetrated by fasteners (not marked). Hole 4213 is used to realize the connection between the first PCB board 421 and the buckle connector 422. By adjusting the fastener, the tightness of the connection between the first PCB board 421 and the buckle connector 422 can be adjusted. The buckling strength between the buckle connectors 422. In this embodiment, the number of the first electrical connector 4212 is three.

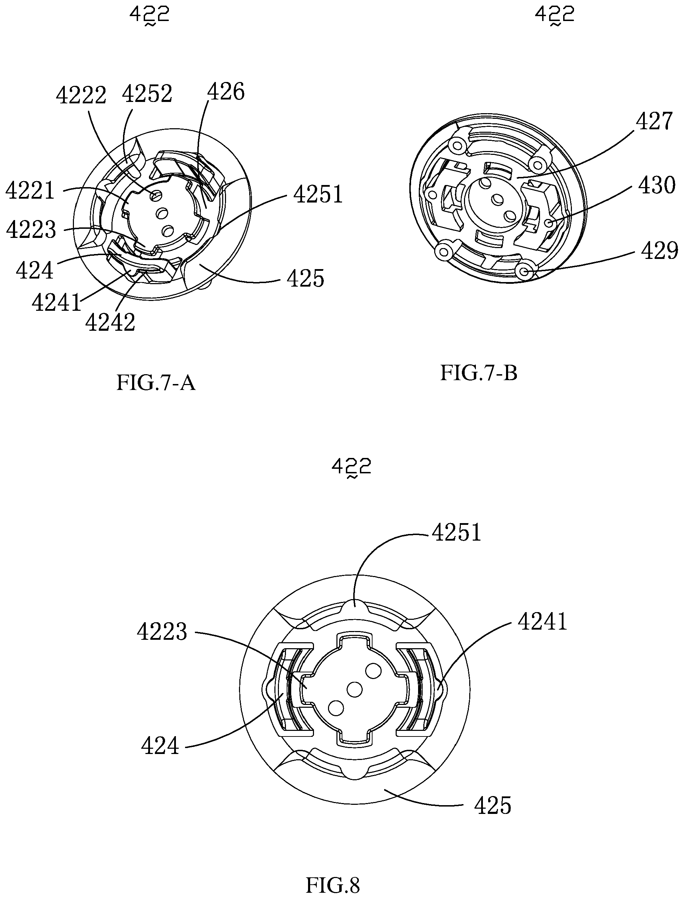

Referring to FIG. 6, FIG. 7-A and FIG. 7-B, the center of the buckle connector 422 extends toward the side away from the first PCB board 421 to form a cylindrical first connection block 4221. A connecting block 4221 is provided with at least two first receiving holes 4222. The number of the first receiving holes 4222 corresponds to the first electrical connector 4212 and accommodates the first electrical connector 4212. The member 4212 is exposed to the buckle connection surface 426 through the first receiving hole 4222. The outer wall of the first connecting block 4221 extends along the "cross" direction to form four first bumps 4223, and a gap is left between the first bump 4223 and the buckle connector 422 to form a space. Preferably, the number of the first receiving holes 4222 is three.

Referring to FIGS. 7-A, 7-B, and 8, the buckle connector 422 is provided with a first buckle block 424 and a second buckle block 424 on opposite sides corresponding to the extending direction of the first protrusion 4223. A buckle block 425, the first buckle block 424, the second buckle block 425, and the first connection block 4221 are formed on the buckle connection surface 426, and the first buckle block 424 and the second buckle block The block 425 is arranged around the first connecting block 4221, the first buckling block 424, the second buckling block 425 can be deformed to a certain extent after being forced, and the middle through hole 4213 and the first buckling block 424 Correspondingly, the first buckling block 424 is received in the middle through hole 4213. The first buckling block 424 and the second buckling block 425 respectively extend away from the first PCB board 421 and the first buckling block 424 and the second buckling block 425 are respectively connected to the first bump There is a gap space between 4223, and the first buckling block 424 and the second buckling block 425 are arranged around the first connecting block 4221. The first buckling block 424 is formed with a connecting protrusion 4241 extending along a side away from the first connecting block 4221, and a side of the second buckling block 425 close to the first connecting block 4221 is recessed to form a recess. In the groove 4251, the connecting protrusion 4241 corresponds to the groove 4251 and both are arc-shaped, and the connecting line between the opposite connecting protrusion 4241 and the groove 4251 is arranged in a cross direction. When the two module units 10 are connected, the first buckling block 424 and the second buckling block 425 are correspondingly connected, the connecting protrusion 4241 is in contact with the groove 4251, the first connecting block 4221, the first A plane is defined between the buckling block 424 and the second buckling block 425, and a gap is formed between the first protrusion 4223 and the plane for the external buckle assembly (not shown) to be placed. Into.

The buckle mounting surface 427 is provided with two buckle connection holes 430, the buckle connection hole 430 matches the position of the first buckle block 424, and the buckle connection hole 430 is correspondingly arranged on the connection protrusion Block 4241, and the buckle connection hole 430 extends into the first buckle block 424, and a fastener can be driven into the buckle connection hole 430. The depth is used to control the buckling force between the two surface buckles 42.

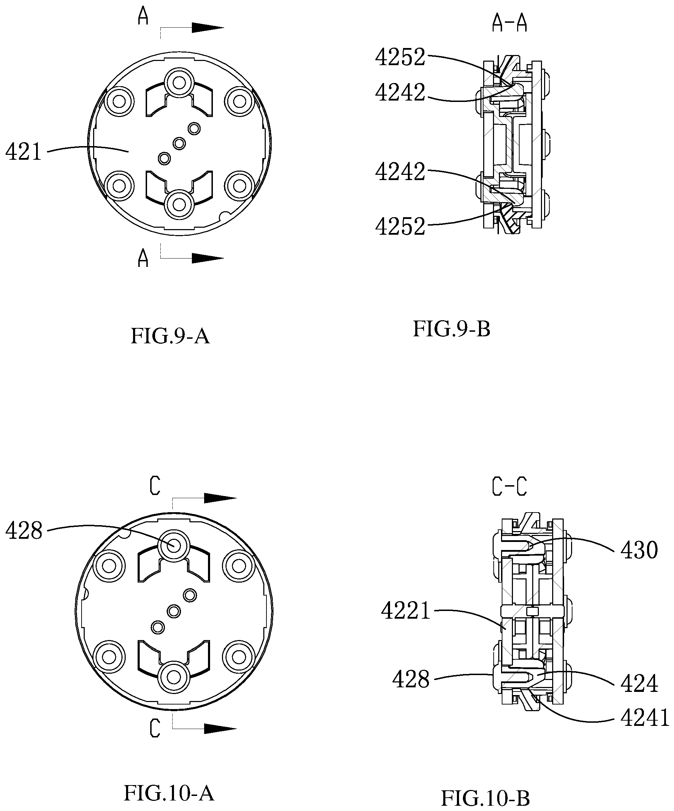

Please continue to refer to FIG. 7-A, the side of the first buckling block 424 away from the first connecting block 4221 protrudes to form a first buckling block 4242, and the second buckling block 425 is close to the first connecting block 4221 One side is recessed to form a second clamping block 4252, the first clamping block 4242, the second clamping block 4252 is disposed on the side away from the first PCB board, the first clamping block 4242, the second clamping block 4252 The clamping block 4252 and the connecting protrusion 4241 and the groove 4251 respectively form a "T" shape, and the first clamping block 4242 and the second clamping block 4252 are arranged in an arc shape. Please refer to Figure 8, Figure 9-A and Figure 9-B, taking the mating connection of the two buckle connectors as an example. When the connecting protrusion 4241 is in contact with the corresponding groove 4251, the first The clamping block 4242 elastically abuts against the second clamping block 4252 to realize the mating connection between the two module units 10.

Please refer to FIGS. 10-A and 10-B in combination with FIGS. 7-A and 7-B. The middle through hole 4213 and the snap connection hole 430 are inserted through the fastener 428 to realize the first PCB board 421 and For the connection of the buckle connector 422, the fastener 428 penetrates the middle through hole 4213 and is received in the buckle connection hole 430, and the surface buckle 42 is driven in during the buckling process of the surface buckle 42 The first buckling block 424 of the fastener 428 is deformed toward the first connecting block 4221, so that the first buckling block 4242 and the second buckling block 4252 are buckled together; When the surface buckles 42 are separated, the first buckling block 424 of the fastener 428 is driven into the arc due to the matching arc between the first buckling block 4242 and the second buckling block 4252 Deformation occurs again to the side away from the first connecting block 4221. When the driven fastener 428 is tight, the first buckling block 424 is more difficult to deform. At this time, the two surface buckles 42 are difficult to separate. When the driven fastener 428 is loose, the The first buckle block 424 is easily deformed, and the two surface buckles 42 are easily separated at this time. With this design, the surface buckles 42 connected to each other are easy to install and connect, and the surface buckles 42 connected to each other are difficult to disassemble, so that the surface buckles 42 are easy to assemble and difficult to disassemble. When the module units 10 are spliced together, the first electrical connectors 4212 between the module units 10 are in contact with each other to realize signal transmission.

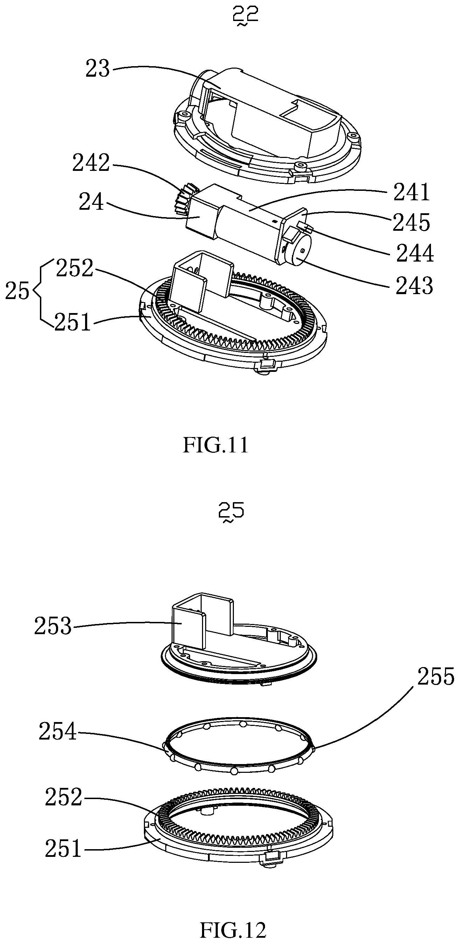

Referring to FIG. 11, the transmission assembly 22 includes a transmission member 24, a rotation assembly 25, and a protective cover 23 connected to the rotation assembly 25. The protective cover 23 is connected to the connecting member 43 of the first rotation member 40. The rotating assembly 25 is connected with the protective cover 23 and forms an accommodating space that can accommodate the transmission member 24. The protective cover 23 corresponds to the transmission member 24. When the protective cover 23 is connected to the transmission member 24, the transmission member 24 is accommodated in the protective cover 23.

As shown in FIG. 11, the transmission member 24 further includes a driving motor 241, a bevel gear 242 coaxially connected to one end of the driving motor 241, and a cylindrical magnetic member 243 coaxially connected to the other end of the driving motor 241. The bevel gear 242 is rotatably connected with the rotating assembly 25 and the bevel gear 242 drives the rotating assembly 25 to rotate. That is, the servo device further includes a driving motor 241, and the driving motor 241 is arranged between any of the rotating parts.

The transmission member 24 also includes a mounting plate 245, and at least one speed sensor 244 connected to the mounting plate 245. As shown in FIG. 11, the mounting plate 245 is fixedly connected to one end of the driving motor 241, and the speed The sensor 244 is arranged in the circumferential direction of the magnetic member 243, and the speed sensor 244 is electrically connected to the connecting assembly 32 (as shown in FIG. 3). In some specific embodiments, the speed sensor 244 is a Hall sensor and the number is two, the two speed sensors 244 are opposite to the magnetic member 243 and are inclined at a certain angle, and the two speed sensors The inclination angle between 244 is 100°-120°; and/or the distance between the speed sensor 244 and the magnetic member 243 is 1-2 mm. The speed sensor 244 can calculate the rotation speed of the driving motor 241 and determine the forward and reverse rotation of the driving motor 241 according to the change of the magnetic pole of the magnetic member 243. Preferably, the inclination angle is 100°-120°. Specifically, the inclination angle may also be 100°, 110°, 115°, and so on. At this time, the projection area of the two speed sensors 244 on the magnetic member 243 is the largest, which can more accurately measure the magnetic pole change on the magnetic member 243.

12, specifically, in order to enable the bevel gear 242 to better drive the rotating assembly 25 to rotate, in some specific embodiments, the rotating assembly 25 includes a hollow connecting plate 251 and a connecting plate 251 fixedly connected gear ring 252, the gear ring 252 is arranged on the side of the connecting plate 251 close to the transmission member 24, the ring surface of the gear ring 252 without gears is connected to the connecting plate 251, the gear The ring surface of the ring 252 provided with a gear is rotatably connected with the bevel gear 242. The gear ring 252 and the bevel gear 242 are correspondingly connected to each other to realize the driving motor 241 to drive the rotation of the rotating assembly 25, and the connecting plate 251 is connected to the connecting member 43 on the second rotating member 50.

Referring to FIG. 12 in conjunction with FIG. 11, the rotating assembly 25 further includes a mounting frame 253 fixedly connected to the driving motor 241 and a rotating frame 254 rotatably connected to the mounting frame 253. The mounting frame 253 is connected to the connecting assembly 32, and the mounting frame 253 and the rotating frame 254 are accommodated in the connecting plate 251. The rotating frame 254 has a ring structure. Specifically, a plurality of balls 255 are provided on the rotating frame 254, and the plurality of balls 255 are distributed in a circle. The rotating frame 254 is sleeved on the mounting frame 253, and the mounting frame 253 is connected to the connecting plate 251 through the balls 255 and rotates relatively. The protective cover 23 corresponds to the driving motor 241, the speed sensor 244, the magnetic member 243, and the mounting frame 253 and the protective cover 23 accommodates the driving motor 241, the speed sensor 244, the magnetic member 243 and the mounting frame 253. By adopting this design, the volume of the transmission assembly 22 can be reduced, thereby reducing the volume of the entire module unit 10, and the design is compact.

With this design, when the bevel gear 242 and the gear ring 252 rotate relative to each other, the mounting frame 253, the drive motor 241, the protective cover 23, the gear ring 252, and the connecting plate 251 rotate relative to each other, and the mounting frame 253 drives the The connecting assembly 32 rotates, and the protective cover 23 drives the first rotating member 40 to rotate, so as to realize the relative rotation of the first rotating member 40 and the second rotating member 50.

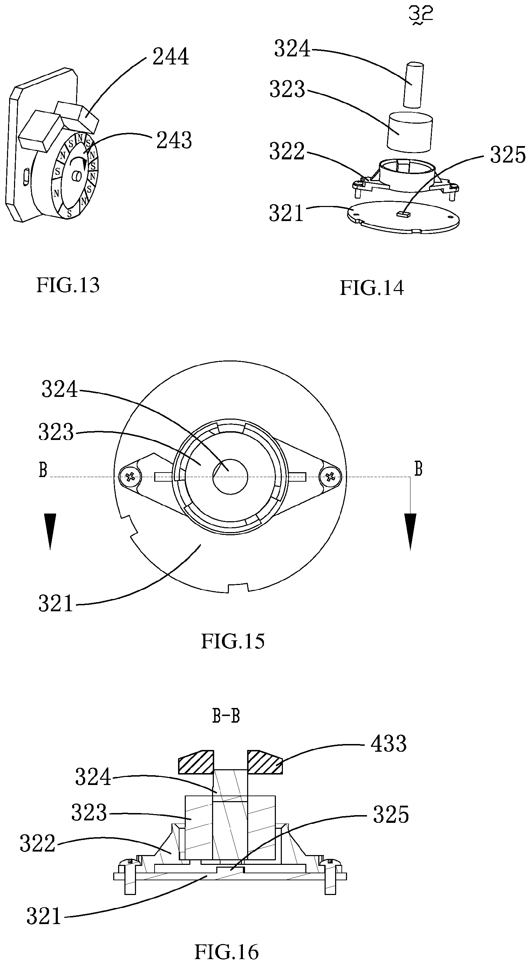

Please refer to FIG. 13, the magnetic member 243 is provided with a plurality of magnetic poles, the magnetic poles include N poles and S poles, wherein the N poles and S poles can be arranged at intervals. When the driving motor 241 rotates to drive the magnetic element 243 and the bevel gear 242 to rotate, the bevel gear 242 drives the rotating assembly 25 to rotate. At this time, the speed sensor 244 senses multiple magnetic poles on the magnetic element 243. The change is used to calculate the rotation speed of the drive motor 241 and determine the forward and reverse rotation of the drive motor 241.

Referring to FIGS. 14, 15 and 16, the connecting assembly 32 further includes a second PCB board 321 connected to the mounting frame (not shown), a conductive ring seat 322 connected to the second PCB board 321, and a part The slip ring 323 accommodated in the conductive ring seat 322, the magnetic ring 324 accommodated in the slip ring 323, the slip ring 323 is sleeved on the periphery of the magnetic ring 324, the magnetic ring 324 and the abutment The holding member 433 resists, and the second PCB board 321 is a controller. The second PCB board 321 is electrically connected to the speed sensor 244 and the driving motor 241. The second PCB board 321 is provided with a position sensor 325 at a position corresponding to the magnetic ring 324. The position sensor 325 rotates synchronously with the slip ring 323. The distance between the magnetic ring 324 and the position sensor 325 is 1mm-2mm. The first rotating member 40 drives the slip ring 323 and the position sensor 325 to rotate relative to the magnetic ring 324. The position sensor 325 is used to detect the position change signal of the magnetic ring 324 to obtain the rotation angle of the magnetic ring 324, and detect two rotations by detecting the rotation angle between the magnetic ring 324 and the position sensor 325 The rotation information between the parts is transmitted to the second PCB board 321. The controller is arranged on the second PCB board 321. The controller controls the control station based on the position sensor 325 detecting the rotation angle information and the target angle command. The driving motor 241 runs at a set speed.

When the first rotating member 40 and the second rotating member 50 need to rotate with each other, the driving motor 241 may first drive the connecting plate 251 to rotate, and then the connecting plate 251 drives the fixedly connected connecting plate 251 The second PCB board 321 rotates. Since the conductive ring seat 322 and the slip ring 323 are sequentially fixed on the second PCB board 321, the corresponding conductive ring seat 322 and the slip ring 323 will also rotate. That is, by driving the driving motor 241, the first rotating member 40 can be driven to rotate synchronously, and the conductive ring seat 322 drives the slip ring 323 to rotate relative to the magnetic ring 324.

At the same time, since the magnetic ring 324 is connected to the second rotating member 50, and because the magnetic ring 324 is connected to the resisting member 433, the magnetic ring 324 and the second rotating member 50 will not follow The second PCB board 321 rotates.

Therefore, based on the above-mentioned connection structure and linkage relationship, the first rotating member 40 and the second rotating member 50 can be relatively rotated, and the relative rotation between the position sensor 325 and the magnetic ring 324 can be detected by the position sensor 325. And the relative rotation angle between the first rotating member 40 and the second rotating member 50 is obtained.

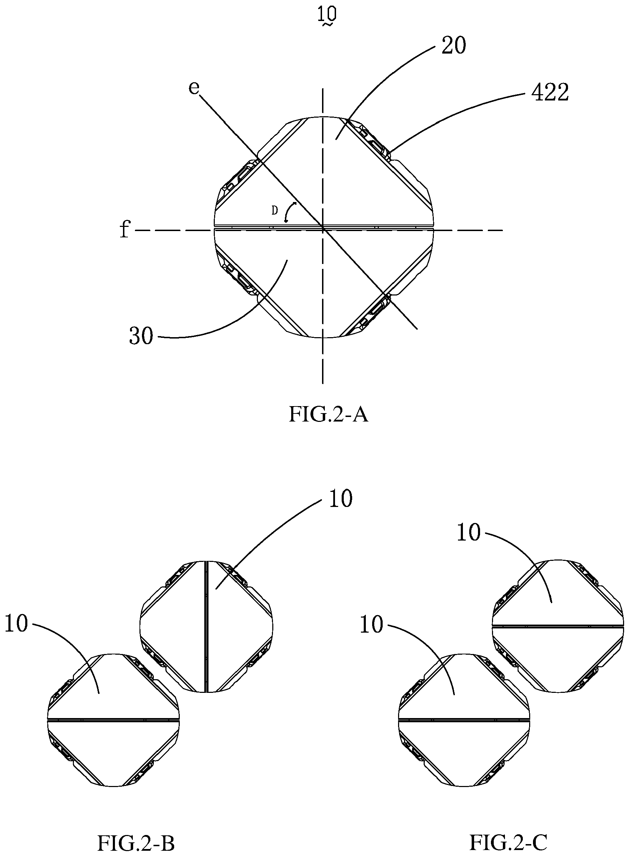

Please continue to refer to Figure 2-A, the module unit 10 includes two relatively rotatable first rotating part 20, a second rotating part 30, the first rotating part 20, the second rotating part 30 is a hemispherical structure, two Each of the rotating parts rotates along the vertical line f of the hemispherical section; at least one buckle connector 422 is provided on one of the rotating parts, and the position of the buckle connector 422 on the two rotating parts is a mirror image based on the hemispherical section. Symmetrical, that is, the setting positions of the snap-fit connectors 422 of the two rotating parts are mirror-symmetrical based on the interface of the two rotating parts; the module units 10 are plugged and connected through a set of snap-fit connectors 422.

The snap connector 422 is circular, a vertical line e passing through the center of the snap connector 422 and perpendicular to the plane where the snap connector 422 is located intersects the rotation perpendicular line f of the rotating part, and The angle of intersection is D and is 30°-60°. The module unit 10 sets the number of the buckle connectors 422 to be an even number. Optionally, in some specific embodiments, the included angle D is 45°. Please refer to Figure 2-B and Figure 2-C. At this time, when the intermediate shafts of the two module units 10 are parallel or vertical, please refer to Figure 2-B and Figure 2-C. The splicing can be realized at any time, and the coupling of the degrees of freedom between the mutually spliced module units 10 can be reduced.

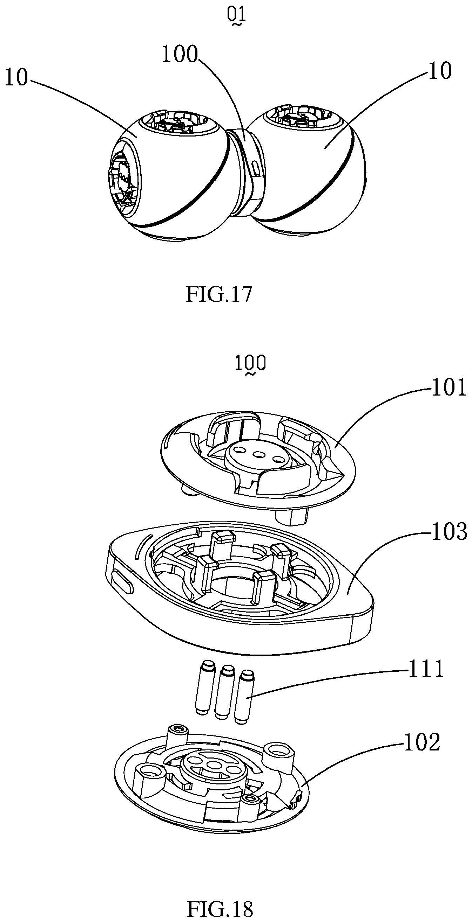

Referring to FIG. 17, the second embodiment of the present invention provides a modular robot 01. The modular robot 01 includes at least two modular units 10, which are used to connect the buckle assembly 100 with the modular units 10, any The two modular units 10 can be connected by the buckle assembly 100 to form a motion mechanism, and the modular unit 10 and the modular unit 10 can be spliced and combined to form modular robots of different structures through the different connection modes of the buckle assembly 100. 01.

The buckle assembly 100 includes a rotating connection portion 103, a first buckle portion 101 and a second buckle portion 102 respectively detachably connected to opposite sides of the rotation connection portion 103, and the first buckle portion 101 is respectively penetrated , The second buckle portion 102, at least two second electrical connectors 111 of the rotating connection portion 103. The second electrical connection member 111 may be any one of electrical connections such as copper pillars, alloy pillars, etc., which perform a conductive transmission function. In this embodiment, the second electrical connection member 111 is an electrical connection member. The structures of the first buckle portion 101 and the second buckle portion 102 are mirror images. Any one of the buckle connectors 422 of the two module units 10 is screwed and fixedly connected to the first buckle portion 101 and the second buckle portion 102 respectively.

The two module units 10 are joined by the buckle assembly 100, one of the module units is connected to the first buckle portion 101, and the other module unit is connected to the second buckle portion 102.

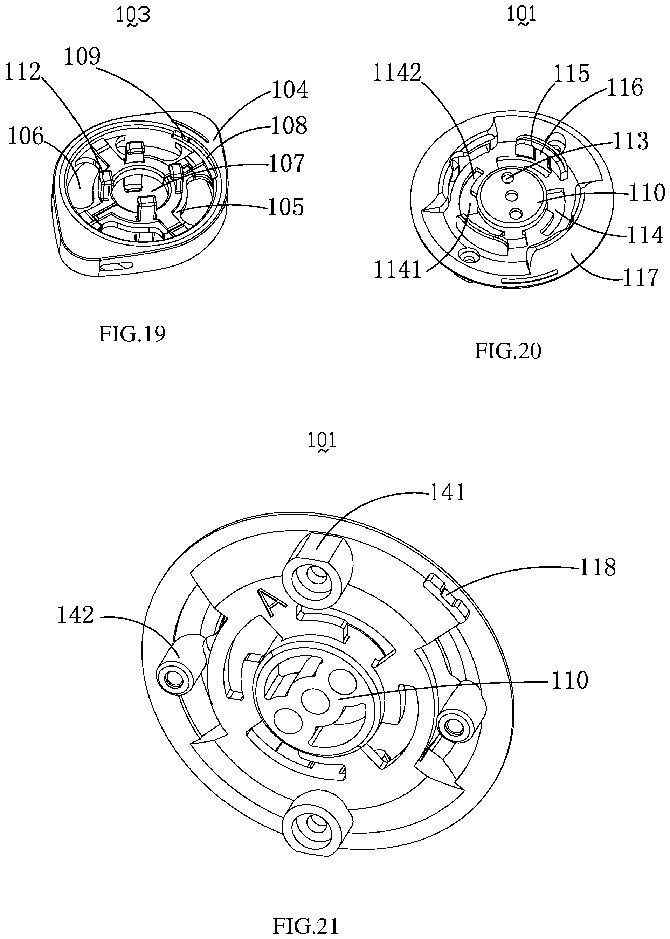

Referring to FIGS. 18 and 19, the rotating connecting portion 103 includes a connecting shell 104 and a fixed core 105 arranged in the connecting shell 104. The fixed core 105 is a circular plate arranged in the connecting shell 104. 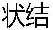 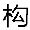 _{∘} Like structure. The fixed core 105 is recessed toward the opposite sides of the end faces of the first buckle portion 101 and the second buckle portion 102 to form a space for accommodating the first buckle portion 101 and the second buckle portion 102, so The outer peripheral walls of the first buckle portion 101 and the second buckle portion 102 are respectively sleeved with the inner wall of the connecting housing 104.

The fixed core 105 is provided with rotating holes 106 in any two mutually perpendicular diametric directions, the rotating holes 106 are waist-shaped holes and the rotating holes 106 are arranged on the inner wall of the fixed core 105 and the connecting housing 104 . A second accommodating hole 107 is provided in the center of the fixed core 105. The second accommodating hole 107 accommodates the first buckle portion 101 and the second buckle portion 102, and the second electrical connector 111 passes through the For the second receiving hole 107, in this embodiment, the number of the second electrical connector 111 is three.

Please continue to refer to FIG. 19, the fixed core 105 is further provided with at least one locking member 112, and the locking member 112 is provided between the rotating hole 106 and the second receiving hole 107. The locking member 112 extends in the direction of the first buckle portion 101 and the second buckle portion 102, respectively, and one end of the locking member 112 close to the first buckle portion 101 and the second buckle portion 102 extends along the direction of the first buckle portion 101 and the second buckle portion 102. The central axis of the second receiving hole 107 protrudes to form a hook shape, and the locking member 112 is an elastic structure. The locking member 112 and the first buckle portion 101 and the second buckle portion 102 are rotatably matched to realize the detachable connection of the first buckle portion 101, the second buckle portion 102 and the rotating connection portion 103. In this embodiment, the number of the locking members 112 is four, and the locking members 112 are distributed on two diameters that are perpendicular to each other. The inner wall of the connecting housing 104 facing the first buckle portion 101 and the second buckle portion 102 is further provided with a card slot 108, and the card slot 108 is provided with a limiting protrusion 109, and the limiting protrusion 109 is connected to the The first buckle portion 101 and the second buckle portion 102 are connected.

Referring to FIG. 20, the center of the first buckle portion 101 respectively extends toward the side close to and away from the rotating connecting portion 103 to form a columnar second connecting block 110, and the second connecting block 110 is provided with a receiving block 110. The accommodating holes 113 of the second electrical connector 111 and the number of the accommodating holes 113 correspond to the number of the second electrical connector 111, and the second electrical connector 111 is removed from the accommodating hole 113 exposed. The first buckle portion 101 is provided with a rotation limiting hole 114 at a position corresponding to the locking member 112. The rotation limiting hole 114 includes a receiving end 1141 and a clamping end 1142 that are connected to each other, and the receiving end is larger than the The size of the locking member 112 is to accommodate the locking member 112, and the size of the clamping end 1142 corresponds to the size of the locking member 112, and the locking member 112 is matedly connected. The locking member 112 and the clamping end 1142 are With interference fit, the locking member 112 is exposed through the rotation limiting hole 114, the rotation limiting hole 114 is arranged in an arc shape, please refer to FIG. 18, the rotating hole 106 is provided for the first buckle The portion 101 and the second connecting block 110 of the second buckle portion 102 pass through.

Please continue to refer to FIG. 20, the first buckle portion 101 is further provided with a clamping plate 115 in the diameter direction, the clamping plate 115 is arranged around the second connecting block 110, and the clamping plate 115 faces away from the rotating connection portion One side of 103 extends. The clamping plate 115 is close to the clamping end 1142 provided in the rotation limiting hole 114, and the clamping plate 115 protrudes toward the second connecting block 110 to form a third clamping block 116, the third clamping block The protrusion 116 extends to the clamping end 1142. When the first buckle portion 101 is connected to the rotary connection portion 103, the locking member 112 corresponds to the accommodating end 1141 of the rotation limiting hole 114, and the corresponding locking member 112 is realized by rotating the first buckle portion 101 or the rotary connection portion 103 Move to the clamping end 1142 of the rotation limiting hole 114, at this time, the locking member 112 and the third clamping block 116 are abutting and clamping, so as to realize the connection between the first clamping portion 101 and the rotation connecting portion 103.

Please continue to refer to FIG. 20, the first buckle portion 101 is further provided with a buckle member 117 in the diameter direction, the buckle member 117 protrudes toward the side away from the rotation connecting portion 103, and the two buckle members are engaged The connecting diameter direction of the piece 117 is perpendicular to the connecting diameter direction of the clamping plate 115. The fastener 117 has an elastic structure and the fastener 117 has the same structure as the second fastener 425 of the module unit 10, that is, the fastener 117 is engaged with the first fastener of the module unit 10 The structure of the block 424 corresponds to that, a side of the fastener 117 close to the second connecting block 110 is recessed to form a recessed hole 119, and the recessed hole 119 is arranged in an arc shape.

Please refer to FIG. 21, the first buckle portion 101 is provided with a detent 118 on the side facing the rotation connecting portion 103, the detent 118 corresponds to the limit protrusion 109, and the detent 118 is in the card slot The 108 slides up to the collision limit protrusion 109 to realize the buckling connection between the first buckle portion 101 and the rotating connection portion 103.

The first buckle portion 101 protrudes toward one side of the rotary connection portion 103 to form a first connection shaft 141 and a second connection shaft 142, and the first connection shaft 141 and the second connection shaft 142 of the first buckle portion 101 The connecting shaft 142 is respectively connected to the second connecting shaft 142 and the first connecting shaft 141 of the second buckle portion 102 and is accommodated in the rotation hole 106, and the rotation hole 106 serves as the first buckle portion 101 It is connected to the second buckle portion 102 for guiding when it rotates.

When assembled and used, the second electrical connector 111 penetrates the second accommodating hole 107 and is connected to the first buckle portion 101 and the second buckle portion 102, and the locking member 112 is respectively penetrated and accommodated in In the accommodating end 1141 of the rotation limiting hole 114 of the first buckle portion 101 and the second buckle portion 102, rotate the rotation connecting portion 103 or the first buckle portion 101 and the second buckle portion 102 to make the first buckle The buckle portion 101, the second buckle portion 102, and the rotary connection portion 103 rotate relatively. At this time, the locking member 112 rotates and moves from the receiving end 1141 to the clamping end 1142, and the locking member 112 is connected to the third of the clamping plate 115. The clamping block 116 is resisted, and the clamping position 118 slides on the clamping slot 108 to abut the limiting protrusion 109 to form a rotation connecting portion 103, the first buckling portion 101, and the second buckling portion 102. The locking structure.

The sequence of assembly and use described above can also be adjusted, that is, the first buckle portion 101 can be connected to the rotating connecting portion 103 first, and then the second buckling portion 102 can be connected to the rotating connecting portion 103. The first buckle The locking part 101 and the locking part 112 of the second buckle part 102 are both contained in the receiving end 1141. At this time, the rotating connecting part 103 is rotated, so that the locking part 112 rotates to the locking end 1142, and the locking position 118 Slide on the card slot 108 until it interferes with the limiting protrusion 109.

The design of the buckle assembly 100 is simple and convenient, and can improve the stability of the buckle connection at a lower cost, so that the rigidity of the buckle assembly 100 connection is improved, and it can withstand large external forces without changing the previous The way the buckles are connected to each other.

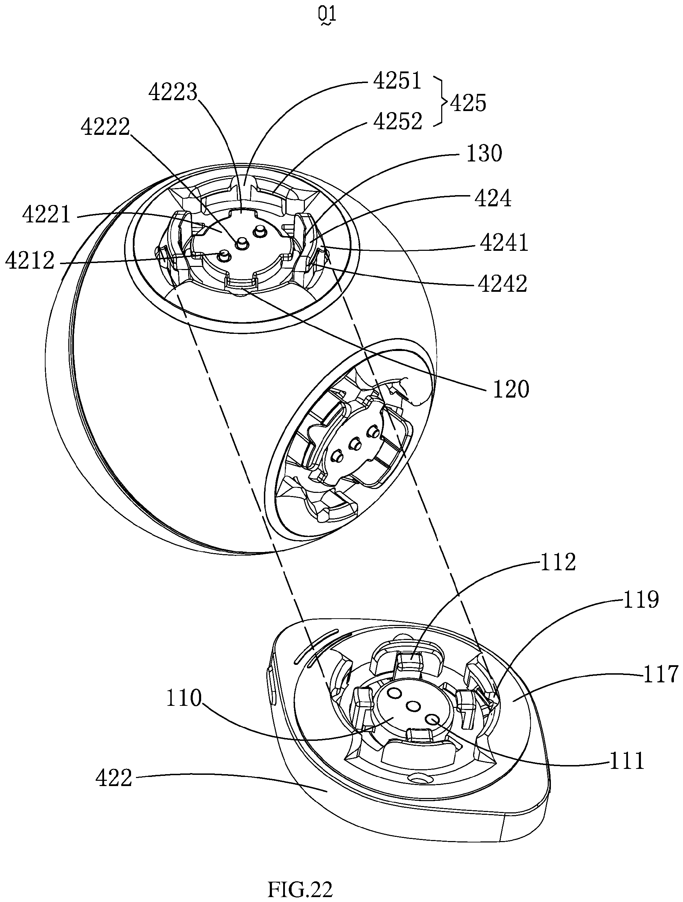

Please refer to FIG. 22, a buckle fastening component (not labeled) is provided, which includes the surface buckle 42 and the buckle component 100 that cooperates with the surface buckle 42. A gap is left between the first protrusion 4223 on the surface buckle 42 and the buckle connecting member 422 to form an accommodating space 120, and the accommodating space 120 accommodates the locking member 112. The first buckling block 424 protrudes toward the first protrusion 4223 to form a clamping member 130, and the clamping member 130 is used for resisting the locking member 112 to limit the movement of the locking member 112 and realize the clamping The mating connection between the buckle assembly 100 and the module unit 10.

When the buckle assembly 100 is mated and connected with the module unit 10, the locking member 112 correspondingly extends into the first connecting block 4221, and the buckle assembly 100 and the module unit are realized by rotating the locking member 112 and/or the buckle assembly 100 10's relative rotation. At this time, the locking member 112 rotates into the accommodating space 120 and and the locking member 112 respectively resist the first protrusion 4223 and the clamping member 130, and the recessed hole 119 on the locking member 117 rotates to and When the connecting protrusion 4241 resists, the connection between the buckle assembly 100 and the module unit 10 can be locked. At this time, the first connection block 4221 is in contact with the second connection block 110, and the first electrical connection piece 4212 is in contact with the second electrical connection piece 111 to realize signal transmission.

The present invention further provides a modular robot, which includes the above-mentioned at least two modular units 10 spliced together, and includes the above-mentioned snap-fastening assembly. For details, please refer to the foregoing description of the snap-fastening assembly, which will not be described here.. The buckle fastening component can be used to connect any two or more of the module unit 10, wheels, mechanical arms, or bases.

The present invention further provides a modular robot, which includes a plurality of functional components and at least one buckle fastening component as described above, and the functional component includes at least one surface buckle 42 as described above, The buckle fastening component includes the buckle component 100. The buckle fastening component is used to connect any two functional components, and the two functional components are indirectly connected by the buckle fastening component, that is, the indirect connection of the two functional components is realized through the connection of the surface buckle 42 and the buckle component 100 connection.

The modular robot 01 includes any one or a combination of a position servo system, a speed servo system, and a torque servo system.

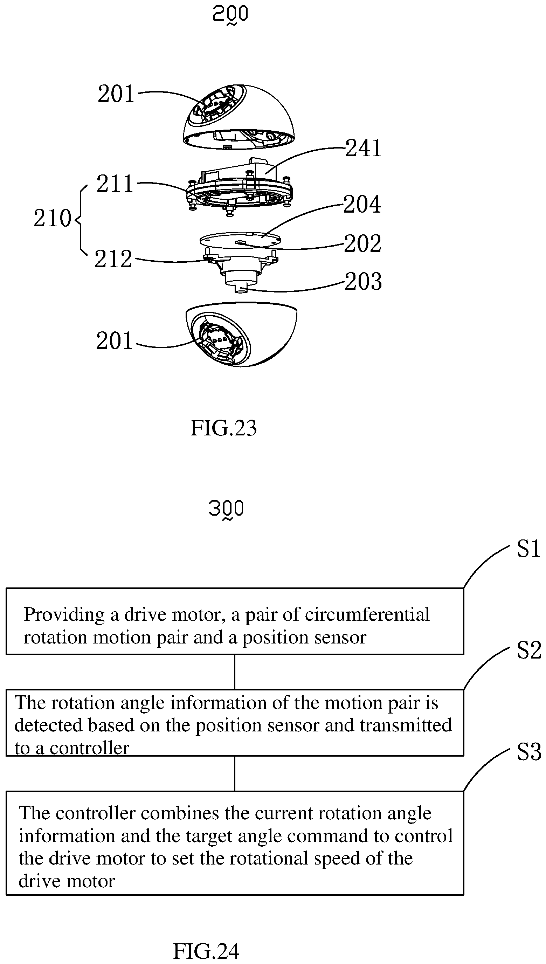

Referring to FIG. 23, the third embodiment of the present invention provides a module unit position servo system 200. The module unit 10 in the first embodiment of the present invention includes the module unit position servo system 200. The module unit position servo system 200 uses To detect the position change between the two rotating parts 201 in the module unit 10, the two rotating parts 201 can rotate relative to each other, and the module unit position servo system 200 includes the position sensor 202 provided in any one of the rotating parts 201. And a pair of movement pairs 210 that can rotate in the circumferential direction. The module unit position servo system 200 further includes a transmission assembly 211 and a connection assembly 212 that connect the two rotating parts 201, wherein the transmission assembly 211 and the connection assembly 212 The movement pair 210 is constituted. The position sensor 202 senses the rotation angle information between the movement pairs 210, and controls the rotation of the transmission assembly 211 in combination with a target angle command.

The connecting assembly 212 also includes a magnetic ring 203 corresponding to the position sensor 202. When the two rotating parts 201 rotate relative to each other, the magnetic ring 203 can rotate relative to the position sensor 202. By detecting the magnetic ring The rotation angle between 203 and the position sensor 202 is used to detect the rotation angle information between the two rotating parts 201.

The connecting component 212 also includes a controller 204 which is electrically connected to the position sensor 202. The rotation angle information detected by the position sensor 202 is transmitted to the controller 204, and the controller 204 controls the corresponding rotation angle. The information is transmitted to the transmission assembly 211.

The transmission assembly 211 includes a driving motor 241, the driving motor 241 is arranged in any one of the rotating parts 201, the controller 204 controls the driving motor based on the rotation angle information detected by the position sensor 202 and a target angle command 241 rotation speed.

11 and 13, the transmission assembly 211 further includes at least two speed sensors 244 and a magnetic member 243 coaxially connected with the driving motor 241, the speed sensor 244 is disposed opposite to the magnetic member 243 In the circumferential direction, the speed sensor 244 detects the magnetic pole change of the magnetic member 243 to calculate the rotation speed of the drive motor 241 and determine the forward and reverse rotation of the drive motor 241.

Referring to FIG. 24, a fourth embodiment of the present invention provides a method 300 for controlling a position servo system of a module unit, which includes the following steps:
S1: Provide a drive motor, a pair of motion pairs that can rotate in a circumferential direction, and a position sensor;
S2: detecting the rotation angle information of the motion pair based on the position sensor and transmitting it to a controller;
S3: The controller combines the current rotation angle information and the target angle command to control the driving motor to set the rotation speed of the driving motor.

Compared with the prior art, the buckle fastening assembly and the modular robot provided by the present invention have the following beneficial effects:
1. The buckle fastening component includes a buckle component and a surface buckle matched with the buckle component; the surface buckle includes a buckle connection surface, and a first connection block extends on the buckle connection surface, so A gap is formed between the first connecting block and the buckle connecting surface, the buckle assembly includes at least one buckle portion, the buckle portion includes a second connecting block and a locking is arranged around the second connecting block When the surface buckle is rotatably connected with the buckle assembly, the first connecting block is in contact with the second connecting block, and the locking member is placed in the gap. By inserting the locking member into the gap of the surface buckle, the stability of the connection between the buckle component and the surface buckle is realized. The buckle component and the surface buckle need to be rotated at a certain angle to each other before installation or disassembly can be realized..
2. By designing the locking piece into a hook shape to cooperate with the rotation limit hole, the connection and cooperation between the buckle assembly and the surface buckle are further strengthened. The buckle assembly adopting this design has strong structural rigidity.
3. The buckle component includes two buckle parts. Based on the specific structure of the two mirror-symmetrical buckle parts of the present invention, the buckle component has no male/female buckle. When the buckle component is set in multiple When it is installed on electronic equipment such as modular units, wheels or robotic arms, the buckle assembly can be spliced with the surface buckle at will, without considering the male/female cooperation relationship. The connecting housing of the buckle portion is further provided with a groove on the inner wall of the two buckle portions, a limit protrusion is provided on the groove, and the buckle portion faces the rotation connecting portion. One side is provided with a detent corresponding to the limit protrusion, and the detent is slid on the card slot to interfere with the limit protrusion, so as to realize the snap-fit connection between the detent portion and the rotating connection portion. Adopting this design is more convenient for the buckle connection between the buckle part and the rotating connection part, and can also play a role of mechanical foolproof.
4. The locking member is in interference fit with the clamping end, and the locking member is inserted into the receiving end and screwed to the clamping end to be fixed. Adopting this design makes the connection between the buckle part and the rotating connection part more stable, and the buckle part is not easy to fall off from the rotation connection part.
5. When the locking member and the third clamping block are abutting and clamping, the fixing of the clamping part on the rotating connection part can be completed, and the stability of the connection of the clamping part on the rotation connection part can be further increased.
6. The second electrical connection piece penetrates the second connection block through the accommodating hole. When the surface buckle is connected to the buckle assembly, the mechanism can be realized through the contact between the first electrical connection and the second connection piece. Power supply and command transmission between.
7. By setting the buckle piece, the first buckle block will produce a certain deformation during the splicing or separation process of the surface buckle, and the adjustment screw driven into the first buckle block will also move accordingly, thereby enhancing The buckling strength of the buckle of the first buckling block. Further, in conjunction with the matching arc design between the contact surfaces of the first clamping block and the second clamping block, the surface buckle can exhibit an effect of "easy to assemble and difficult to dismantle".
8. The buckle fastening component is used to connect any two functional components. The buckle fastening component can be applied between any two functional components to transmit the rotational torque between the two functional components and play a connection role. It has rich functions in a variety of usage scenarios.
9. When the two surface buckles are buckled together, the first clamping block and the second clamping block are buckled together. By arranging the first clamping block and the second clamping block to be matched, the buckle can be quickly assembled and disassembled, which is convenient for users to operate and use, and can especially meet the needs of users aged 6-16.
   Through the above-mentioned connection method, since the first buckling block will relatively produce a certain deformation during the buckling process, the surface buckle connection can be made stronger, and the stability of the buckle splicing can also be improved. When the surface buckle is applied to a robot arm, a robot wheel, etc., and rotates at a relatively large speed on the corresponding rotating surface, the corresponding configuration splicing is not easy to be disconnected or the phenomenon of power failure occurs.
10. The first clamping block and the second clamping block are arranged in matching arc surfaces, and the arc surface setting is adopted to facilitate the connection between the surface buckles. A central through hole is provided on the buckle mounting surface, and the central through hole extends into the first buckle block. By driving an adjusting screw in the central through hole and adjusting the depth of the adjusting screw, it is possible to Adjust the buckling force of the surface buckle.
   Further, since the first buckling block will produce a certain deformation during the splicing or separation process of the surface buckle, the adjusting screw driven into the first buckling block will also move accordingly, thereby strengthening the first The force of the buckle of the buckle block. Further, in conjunction with the matching arc design between the contact surfaces of the first clamping block and the second clamping block, the surface buckle can exhibit an effect of "easy to assemble and difficult to dismantle".
11. The surface buckle includes a first electrical connector and a first PCB board. When the two surface buckles are spliced, power supply and command transmission can be realized through the contacted first electrical connector.
12. The buckle mounting surface is also provided with a plurality of side holes, so that the first PCB board and the buckle mounting surface can be fixed by the side hole fasteners, and the above structure can be simplified The internal structure of the surface buckle can be more stable in electrical connection, so as to improve the overall service life of the interconnected mechanical structures.
13. An LED light source is also provided in the surface buckle, and the LED light source can be arranged on the first PCB board, and light can be transmitted through the shielding sheet sleeved on the LED light source, so The overall appearance of the device provided with the surface buckle is beautiful and it is convenient for users to quickly find the position of the surface buckle in a dark environment and perform splicing. The LED light source can also emit light in the modular robot to increase the beauty of the product. It can also design different working states of the LED light source to correspond to the different working states of the modular robot.

The foregoing descriptions are only preferred embodiments of the present disclosure, and should not be construed as limiting the scope of the disclosure. Any modifications, equivalent replacements and improvements made within the principles of the present disclosure should be included within the protection scope of the present disclosure.

## Claims

1. A buckle fastening assembly, comprising a buckle assembly and a surface buckle coupled with the buckle component; the surface buckle comprises a buckle connecting surface, a first connecting block extends on the buckle connecting surface, and a gap is formed between the first connecting block and the buckle connecting surface; the buckle assembly comprises at least one buckle portion, and the buckle portion comprises a second connecting block and a locking member arranged around the second connecting block; when the surface buckle is rotatably connected with the buckle assembly, the first connecting block is in contact with the second connecting block, and the locking member is placed in the gap.

2. The buckle fastening assembly of claim 1, wherein the buckle fastening assembly is used for connecting of a modular robot, the buckle fastening assembly further comprises a rotating connecting portion, and the buckle portion is connected to the rotating connecting portion; the rotating connecting portion comprises a connecting housing and a fixed core arranged in the connecting housing, the fixed core is provided with a locking member, and the locking member extends toward the buckle portion; a rotating limit hole is provided at the position of the buckle portion corresponding to the locking member, the locking member is exposed through the rotating limit hole, and the locking member forms a hook structure toward the buckle portion.

3. The buckle fastening assembly of claim 2, wherein the buckle assembly comprises two buckle portions, the two buckle portions are respectively disposed on opposite sides of the rotating connecting portion, and the two buckle portions oppositely arranged are mirror-symmetrical; the connecting housing of the buckle portion towards the inner walls of the two buckle portions is also provided with a buckle groove, and the buckle groove is provided with a limiting protrusion; the side of the buckle portion facing the rotating connecting portion is provided with a catch position corresponding to the limiting protrusion, and the catch position slides on the buckle groove until it abuts against the limiting protrusion.

4. The buckle fastening assembly of claim 3, wherein the rotating limit hole comprises a accommodating end and a clamping end connected to each other, and the size of the accommodating end is larger than the size of the locking member to receive the locking member; the locking member is in interference fit with the clamping end, the locking member is inserted from the accommodating end and is fixed by screwing the relative position to the clamping end.

5. The buckle fastening assembly of claim 4, wherein the buckle portion further comprises at least two clamping plates, the clamping plates are arranged around the second connecting block, and the clamping plates protrude toward the second connecting block to form a third clamping block; when the clamping portion is connected with the rotating connecting portion, the locking member correspondingly passes through the accommodating end of the rotating limit hole, so that the locking member and the third clamping block are abutted and clamped.

6. The buckle fastening assembly of claim 2, wherein at least two second electrical connecting members are provided on the rotating connecting portion, and the center of the buckle portion protrudes toward the side away from the rotating connecting portion to form a second connecting block, the second connecting block is provided with at least two accommodating holes, and the second electrical connecting members penetrate the second connecting block through the accommodating holes.

7. The buckle fastening assembly of claim 6, wherein at least two first buckle blocks and at least two second buckle blocks are further formed on the buckle connecting surface, and the first buckle block and the second buckle block are arranged around the first connecting block; the side of the first buckle block away from the first connecting block forms two first clamping blocks and a connecting protrusion disposed between the two first clamping blocks; two second clamping blocks are formed on the side of the second buckle block close to the first connecting block;
the buckle portion further comprises at least two buckle members arranged around the second connecting block, the buckle members have the same structure as the second buckle block, and a concave hole is also provided on the side of the buckle members facing the second connecting block; when the surface buckle is rotatably connected with the buckle assembly, the concave hole abuts against the connecting protrusion.

8. The buckle fastening assembly of claim 7, wherein the first connecting block is provided with at least two accommodating holes, and the surface buckle comprises a first PCB board and at least two of the first electrical connecting members disposed on the first PCB board, the first electrical connecting members are exposed to the buckle connecting surface through the accommodating holes; when the first connecting block is in contact with the second connecting block, the first electrical connecting member is in contact with and is electrically connected to the second electrical connecting member.

9. The buckle fastening assembly of claim 7, wherein the first connecting block extends toward the first and second buckle blocks to form four first protrusions, and the number of the locking members is four, the first protrusion is matched with the locking member, and the gap is formed between the first protrusion and the buckle connecting surface.

10. The buckle fastening assembly of claim 7, wherein when the surface buckles are connected, the first clamping block and the second clamping block are clamped together, the first clamping block and the second clamping block are provided with matching arc surfaces; the surface buckle further comprises a buckle installing surface arranged opposite to the buckle connecting surface, and the buckle installing surface is provided with two buckle connecting holes; the buckle connecting holes match the positions of the first buckle block, and the buckle connecting holes extend into the first buckle block, and the buckle connecting hole extends into the first buckle block; fasteners can be driven into the buckle connecting hole, and the buckling force between the two surface buckles can be controlled according to the depth of the fasteners.

11. The buckle fastening assembly of claim 10, wherein in the snap-fit process of the two surface buckles, the first buckle block is deformed to the side of the first connecting block through the fastener, so that the first clamping block and the second clamping block are fastened; when the two surface buckles are separated, due to the matching arc surfaces between the first clamping block and the second clamping block, the first clamping block driven into the fastener is deformed to the side away from the first connecting block.

12. The buckle fastening assembly of claim 11, wherein at least two first accommodating holes are formed on the first connecting block, and the surface buckle comprises a first PCB board and at least two of the first electrical connecting members disposed on the PCB board, the first electrical connecting members are exposed to the buckle connecting surface through the first accommodating hole.

13. The buckle fastening assembly of claim 12, wherein at least two side holes are provided on the edge of the buckle installing surface, and the first PCB board and the buckle installing surface are fixed by accommodating the fastener through the side holes.

14. The buckle fastening assembly of claim 12, wherein the first PCB board facing the buckle installing surface is provided with a plurality of LEDs , a shielding sheet sleeved on the LEDs is arranged between the buckle installing surface and the first PCB board.

15. A modular robot, comprising at least two functional assemblies and at least one buckle fastening assembly, the buckle fastening assembly comprises a buckle assembly and a surface buckle matched with the buckle assembly; at least one of the surface buckles is arranged on the functional assemblies; the surface buckle comprises a buckle connecting surface, and a first connecting block extends on the buckle connecting surface; a gap is formed between the first connecting block and the buckle connecting surface, and the buckle assembly comprises at least one buckle portion; the buckle portion comprises a second connecting block and a locking member arranged around the second connecting block; when the surface buckle is rotatably connected with the buckle assembly, the first connecting block is in contact with the second connecting block, and the locking member is placed in the gap, and the connection of at least two functional assemblies is realized by the connection of the buckle assembly and the surface buckle.
